# EUROPÄISCHE PATENTSCHRIFT

(11) **EP 2 021 588 B1**
(45) Veröffentlichungstag und Bekanntmachung des Hinweises auf die Patenterteilung: **06.10.2010**
(21) Anmeldenummer: 07728512.0
(22) Anmeldetag: 25.04.2007
(51) Int. Cl.: F01L 1/34, F16K 31/06

(54) **STEUERVENTIL FÜR EINEN NOCKENWELLENVERSTELLER**
CONTROL VALVE FOR A CAMSHAFT ADJUSTER
SOUPAPE DE COMMANDE POUR UN DISPOSITIF DE RÉGLAGE D'ARBRE À CAMES

(30) Priorität: 13.05.2006 DE 102006022402
(43) Veröffentlichungstag der Anmeldung: 11.02.2009
(73) Patentinhaber: Schaeffler KG, 91074 Herzogenaurach (DE)
(72) Erfinder: HOPPE, Jens, 91056 Erlangen (DE); KONIAS, Stefan, 90419 Nürnberg (DE)
(86) Internationale Anmeldenummer: PCT/EP2007/054057
(87) Internationale Veröffentlichungsnummer: WO 2007/131866

(56) Entgegenhaltungen:
- EP-A- 1 447 602
- EP-A2- 1 291 563
- DE-A1- 2 413 884

## Beschreibung

### Gebiet der Erfindung

Die Erfindung betrifft ein Steuerventil für eine Vorrichtung zur variablen Einstellung von Steuerzeiten von Gaswechselventilen einer Brennkraftmaschine, insbesondere nach dem Oberbegriff des Anspruchs 1.

### Hintergrund der Erfindung

In Brennkraftmaschinen werden zur Betätigung der Gaswechselventile Nockenwellen eingesetzt. Nockenwellen sind in der Brennkraftmaschine derart angebracht, dass auf ihnen angebrachte Nocken an Nockenfolgern, beispielsweise Tassenstößeln, Schlepphebeln oder Schwinghebeln, anliegen. Wird eine Nockenwelle in Drehung versetzt, so wälzen die Nocken auf den Nockenfolgern ab, die wiederum die Gaswechselventile betätigen. Durch die Lage und die Form der Nocken sind somit sowohl die Öffnungsdauer als auch die Öffnungsamplitude aber auch die Öffnungs- und Schließzeitpunkte der Gaswechselventile festgelegt. Während der Betätigung der Gaswechselventile üben die Ventilfedern eine Kraft auf die Nocken der Nockenwelle aus, wodurch auf die Nockenwelle Wechselmomente wirken.

Moderne Motorkonzepte gehen dahin, den Ventiltrieb variabel auszulegen. Einerseits sollen Ventilhub und Ventilöffnungsdauer variabel gestaltbar sein, bis hin zur kompletten Abschaltung einzelner Zylinder. Dafür sind Konzepte wie schaltbare Nockenfolger oder elektrohydraulische oder elektrische Ventilbetätigungen vorgesehen. Weiterhin hat es sich als vorteilhaft herausgestellt, während des Betriebs der Brennkraftmaschine Einfluss auf die Öffnungs- und Schließzeiten der Gaswechselventile nehmen zu können. Dabei ist es insbesondere wünschenswert auf die Öffnungs- bzw. Schließzeitpunkte der Einlass- bzw. Auslassventile getrennt Einfluss nehmen zu können, um beispielsweise gezielt eine definierte Ventilüberschneidung einzustellen. Durch die Einstellung der Öffnungs- bzw. Schließzeitpunkte der Gaswechselventile in Abhängigkeit vom aktuellen Kennfeldbereich des Motors, beispielsweise von der aktuellen Drehzahl bzw. der aktuellen Last, können der spezifische Treibstoffverbrauch gesenkt, das Abgasverhalten positiv beeinflusst, der Motorwirkungsgrad, das Maximaldrehmoment und die Maximalleistung erhöht werden.

Die beschriebene Variabilität der Gaswechselventilsteuerzeiten wird durch eine relative Änderung der Phasenlage der Nockenwelle zur Kurbelwelle erreicht. Dabei steht die Nockenwelle meist über einen Ketten-, Riemen-, Zahnradtrieb oder gleichwirkende Antriebskonzepte in Antriebsverbindung mit der Kurbelwelle. Zwischen dem von der Kurbelwelle angetriebenen Ketten-, Riemen- oder Zahnradtrieb und der Nockenwelle ist eine Vorrichtung zur variablen Einstellung der Steuerzeiten von Gaswechselventilen einer Brennkraftmaschine, im Folgenden auch Nockenwellenversteller genannt, angebracht, die das Drehmoment von der Kurbelwelle auf die Nockenwelle überträgt. Dabei ist diese Vorrichtung derart ausgebildet, dass während des Betriebs der Brennkraftmaschine die Phasenlage zwischen Kurbelwelle und Nockenwelle sicher gehalten und, wenn gewünscht, die Nockenwelle in einem gewissen Winkelbereich gegenüber der Kurbelwelle verdreht werden kann.

In Brennkraftmaschinen mit je einer Nockenwelle für die Einlass- und die Auslassventile können diese mit je einem Nockenwellenversteller ausgerüstet werden. Dadurch können die Öffnungs- und Schließzeitpunkte der Einlass- und Auslassgaswechselventile zeitlich relativ zueinander verschoben und die Ventilüberschneidungen gezielt eingestellt werden.

Der Sitz moderner Nockenwellenversteller befindet sich meist am antriebsseitigen Ende der Nockenwelle. Der Nockenwellenversteller kann aber auch auf einer Zwischenwelle, einem nicht rotierenden Bauteil oder der Kurbelwelle angeordnet sein. Er besteht aus einem von der Kurbelwelle angetriebenen, eine feste Phasenbeziehung zu dieser haltenden Antriebsrad, einem in Antriebsverbindung mit der Nockenwelle stehenden Abtriebselement und einem das Drehmoment vom Antriebsrad auf das Abtriebselement übertragenden Verstellmechanismus. Das Antriebsrad kann im Fall eines nicht an der Kurbelwelle angeordneten Nockenwellenverstellers als Ketten-, Riemen- oder Zahnrad ausgeführt sein und wird mittels eines Ketten-, eines Riemen- oder eines Zahnradtriebs von der Kurbelwelle angetrieben. Der Verstellmechanismus kann elektrisch, hydraulisch oder pneumatisch betrieben werden.

Zwei bevorzugte Ausführungsformen hydraulisch verstellbarer Nockenwellenverstellern stellen die so genannten Axialkolbenversteller und Rotationskolbenversteller dar.

Bei den Axialkolbenverstellern steht das Antriebsrad mit einem Kolben und dieser mit dem Abriebselement jeweils über Schrägverzahnungen in Verbindung. Der Kolben trennt einen durch das Abriebselement und das Antriebsrad gebildeten Hohlraum in zwei axial zueinander angeordnete Druckkammern. Wird nun die eine Druckkammer mit Druckmittel beaufschlagt, während die andere Druckkammer mit einem Tank verbunden wird, so verschiebt sich der Kolben in axialer Richtung. Die axiale Verschiebung des Kolbens wird durch die Schrägverzahnungen in eine relative Verdrehung des Antriebsrads zum Abtriebselement und damit der Nockenwelle zur Kurbelwelle übersetzt.

Eine zweite Ausführungsform hydraulischer Nockenwellenversteller sind die so genannten Rotationskolbenversteller. In diesen ist das Antriebsrad drehfest mit einem Stator verbunden. Der Stator und das Abtriebselement (Rotor) sind konzentrisch zueinander angeordnet, wobei der Rotor kraft-, form- oder stoffschlüssig, beispielsweise mittels eines Presssitzes, einer Schraub- oder Schweißverbindung mit einer Nockenwelle, einer Verlängerung der Nockenwelle oder einer Zwischenwelle verbunden ist. Im Stator sind mehrere, in Umfangsrichtung beabstandete Ausnehmungen ausgebildet, die sich ausgehend vom Rotor radial nach außen erstrecken. Die Ausnehmungen sind in axialer Richtung durch Seitendeckel druckdicht begrenzt. In jeden dieser Ausnehmungen erstreckt sich ein mit dem Rotor verbundener Flügel, wodurch jede Ausnehmung in zwei Druckkammern geteilt wird. Dadurch werden zwei Gruppen von Druckkammer ausgebildet. Durch gezieltes Verbinden einer Gruppe von Druckkammern mit einer Druckmittelpumpe und der anderen Gruppe von Druckkammern mit einem Tank kann die Phase der Nockenwelle relativ zur Kurbelwelle eingestellt bzw. gehalten werden. Die Flügel können beispielsweise einteilig mit dem Rotor ausgeführt, oder als separate Bauteile ausgebildet sein, welche in einer axial verlaufenden Flügelnut an der äußeren Mantelfläche des Rotors angeordnet sind und mittels eines Federelements radial nach außen gedrängt werden.

Zur Steuerung des Nockenwellenverstellers erfassen Sensoren die Kenndaten des Motors wie beispielsweise die aktuelle Phasenlage der Nockenwelle zur Kurbelwelle, den Lastzustand und die Drehzahl. Diese Daten werden einer elektronischen Kontrolleinheit zugeführt, die nach Vergleich der Daten mit einem Kenndatenfeld der Brennkraftmaschine den Zu- und den Abfluss von Druckmittel zu den verschiedenen Druckkammern steuert.

Um die Phasenlage der Nockenwelle gegenüber der Kurbelwelle zu verstellen, wird in hydraulischen Nockenwellenverstellern eine der zwei gegeneinander wirkenden Druckkammern mit einer Druckmittelpumpe und die andere mit dem Tank verbunden. Der Zulauf von Druckmittel zur einen Kammer in Verbindung mit dem Ablauf von Druckmittel von der anderen Kammer verschiebt den die Druckkammern trennenden Kolben/Flügel, wodurch in Axialkolbenverstellern durch eine Axialverschiebung des Kolbens mittels der Schrägverzahnungen die Nockenwelle relativ zur Kurbelwelle verdreht wird. In Rotationskolbenverstellern wird durch die Druckbeaufschlagung der einen Gruppe von Druckkammern und die Druckentlastung der anderen Gruppe von Druckkammern eine Verschiebung des Flügels in Umfangsrichtung und damit direkt eine Verdrehung der Nockenwelle zur Kurbelwelle bewirkt. Um die Phasenlage zu halten werden beide Druckkammern entweder mit der Druckmittelpumpe verbunden oder sowohl von der Druckmittelpumpe als auch vom Tank getrennt.

Die Steuerung der Druckmittelströme zu bzw. von den Druckkammern erfolgt mittels eines Steuerventils, meist ein 4/3-Proportionalventil. Dieses besteht im Wesentlichen aus einem hohlzylindrisch ausgeführten Ventilgehäuse, einem Steuerkolben und einer Stelleinheit. Das Ventilgehäuse ist mit je einem Anschluss für jede Gruppe von gleichwirkenden Druckkammern (Arbeitsanschluss), einem Anschluss zur Druckmittelpumpe und mindestens einem Anschluss zu einem Tank versehen. Diese Anschlüsse sind meist als Ringnuten an der Außenmantelfläche des Ventilgehäuses ausgebildet, welche über radiale Öffnungen mit dem Inneren des Steuerkolbens kommunizieren. Innerhalb des Ventilgehäuses ist der Steuerkolben axial verschiebbar angeordnet. Der Steuerkolben kann mittels der Stelleinheit, die meist elektromagnetisch oder hydraulisch betätigt wird, entgegen der Federkraft eines Federelements axial in jede Stellung zwischen zwei definierte Endstellungen positioniert werden. Die Außenmantelfläche des Steuerkolbens ist im Wesentlichen dem Innendurchmesser des Ventilgehäuses angepasst und mit Ringnuten und Steuerkanten versehen. Durch eine Steuerung der Stelleinheit können die einzelnen Anschlüsse miteinander hydraulisch verbunden werden, wodurch die einzelnen Druckkammern wahlweise mit der Druckmittelpumpe oder dem Tank verbunden werden können. Ebenso kann eine Stellung des Steuerkolbens vorgesehen sein, in der die Druckmittelkammern sowohl von der Druckmittelpumpe als auch vom Druckmitteltank getrennt sind.

Ein derartiges Steuerventil ist aus der JP 07-229408A bekannt. In diesem Fall sind an der Außenmantelfläche des Ventilgehäuses fünf axial zueinander beabstandete Ringnuten ausgebildet, wobei jede der Ringnuten als ein Anschluss des Ventils dient. In jedem Nutgrund der Ringnuten ist eine radiale Öffnung ausgebildet, welche in das Innere des Ventilgehäuses mündet. Dabei sind Öffnungen benachbarter Nutgründe in Umfangsrichtung um 180° zueinander versetzt. Innerhalb des Ventilgehäuses ist ein massiv ausgebildeter Steuerkolben angeordnet, welcher mittels einer elektromagnetischen Stelleinheit gegen die Kraft einer Feder innerhalb des Ventilgehäuses in axialer Richtung zwischen zwei Endanschlägen positioniert werden kann. Der Außendurchmesser des Steuerkolbens ist dem Innendurchmesser des Ventilgehäuses angepasst. Des Weiteren sind an dem Steuerkolben drei Ringnuten ausgebildet, über welche, abhängig von der Stellung des Steuerkolbens relativ zum Ventilgehäuse, benachbarte Anschlüsse miteinander verbunden werden können.

Aus der DE 198 53 670 A1 ist eine weitere Ausführungsform eines derartigen Steuerventils bekannt. Dieses unterscheidet sich von der in der JP 07-229408A dargestellten Ausführungsform dadurch, dass der Steuerkolben hohl ausgeführt ist. Des Weiteren sind an der äußeren Mantelfläche des Ventilgehäuses nur drei Anschlüsse ausgebildet, wobei sich ein vierter Anschluss in axialer Richtung des Ventilgehäuses ausgebildet ist. Druckmittel kann nun über den axialen Zulaufanschluss, je nach Stellung des Steuerkolbens relativ zum Ventilgehäuse, zu einem der beiden Arbeitsanschlüsse geleitet werden. Gleichzeitig ist der jeweils andere Arbeitsanschluss über eine an der Außenmantelfläche des Steuerkolbens ausgebildete Ringnut mit dem Tankanschluss verbunden. In dieser Ausführungsform eines Steuerventils ist die Lage des Zulaufanschlusses und des Tankanschlusses austauschbar.

Durch das Abwälzen der Nocken einer Nockenwelle auf den Nockenfolger eines Ventiltriebs wirken periodische Wechselmomente auf die Nockenwelle. Diese Wechselmomente werden auf den Rotor des Nockenwellenverstellers übertragen, wodurch in den Druckkammern Druckspitzen entstehen. Um zu verhindern, dass diese Druckspitzen über Druckmittelleitungen und das Steuerventil in den Druckmittelkreislauf der Brennkraftmaschine übertragen werden, sind zwischen dem Steuerventil und der Druckmittelpumpe Rückschlagventile vorgesehen. Dabei können separate oder in das Steuerventil integrierte Rückschlagventile vorgesehen sein.

Ein im Steuerventil integriertes Rückschlagventil ist beispielsweise in der EP 1 291 563 A2 dargestellt. In dieser Ausführungsform ist innerhalb einer an einem Ventilgehäuse ausgebildeten Ringnut ein Schließelement aus einem zu einem Ring gebogenen Band angeordnet. Die Ringnut wird in radialer Richtung von einer Hülse begrenzt. Sowohl in der Hülse als auch im Nutgrund der Ringnut sind Öffnungen ausgebildet, über die das Druckmittel in das Innere des Ventilgehäuses gelangen kann. Des Weiteren besteht das Band aus einem Federstahl und ist in radialer Richtung nach außen vorgespannt. Übersteigt der Druck im Inneren des Ventilgehäuses den Druck des an der Öffnung der Hülse anstehenden Druckmittels, so kommt das Band an der inneren Mantelfläche der Hülse zum Anliegen und verhindert so den Druckmittelstrom vom Inneren des Ventilgehäuses zur Öffnung der Hülse. Im umgekehrten Fall wird das Band durch das an der Öffnung der Hülse anstehende Druckmittel nach innen verformt, wodurch Druckmittel von der Öffnung der Hülse in das Innere des Ventilgehäuses führen kann.

Für weitere aus dem Stand der Technik EP 1 291 563 B1 und DE 24 13 884 A bekannte Ausführungsformen ist - ebenso wie für die Ausführungsform gemäß EP 1 291 563 A2 die Bewegung eines Schließkörpers eines Rückschlagventils von der Öffnungsstellung zur Schließstellung des Rückschlagventils (und umgekehrt) nicht geführt durch eine Führung zwischen Schließkörper und Steuerkolben.

Die nicht vorveröffentlichte Patentanmeldung DE 10 2005 028 757 A1 offenbart ein Steuerventil für einen Nockenwellenversteller, bei welchem ein Schließkörper eines Rückschlagventils ausschließlich strömungsbeaufschlagt ist, ohne dass eine Rückstellfeder auf den Schließkörper einwirkt.

### Aufgabe der Erfindung

Der Erfindung liegt die Aufgabe zugrunde, eine alternative Ausgestaltung eines Steuerventils für einen Nockenwellenversteller mit einem integrierten Rückschlagventil vorzuschlagen.

### Zusammenfassung der Erfindung

Erfindungsgemäß wird die Aufgabe durch die Merkmale des unabhängigen Anspruchs 1 gelöst. Weitere Ausgestaltungen der Erfindung ergeben sich entsprechend den Merkmalen der abhängigen Ansprüche 2 bis 8.

Erfindungsgemäß ist in dem Rückschlagventil ein Schließkörper vorgesehen, der zumindest ein Führungselement sowie einen Sperrkörper aufweist. Hierbei dient das Führungselement einer Führung des Schließkörpers während der Bewegung zwischen einer Öffnungs- und einer Schließstellung des Schließkörpers. Das Führungselement, beispielsweise eine Führungsfläche, kann während einer derartigen Schließbewegung ständig in einem Gleitkontakt mit benachbarten Bauelementen wie dem Steuerkolben oder dem Ventilgehäuse stehen oder erst nach Überwindung eines Spiels quer zu einer Führungsrichtung zur Wirkung kommen. Das Führungselement an sich kann beliebig ausgebildet sein, insbesondere als Gleit- oder Wälzkontakt.

Erfindungsgemäß sind Führungselement und Sperrkörper derart miteinander gekoppelt, dass das Führungselement und der Sperrkörper gemeinsam bewegt werden. Dies bedeutet, dass im Bereich des Führungselements erzeugte Führungskräfte auf den Sperrkörper übertragbar sind, so dass letztlich auch dafür Sorge getragen ist, dass der Sperrkörper hinreichend geführt ist. Insbesondere erfolgt eine Bewegung von Führungselement und Sperrkörper zwischen Öffnungs- und Schließstellung als Starrkörper, wobei zusätzliche Bauelemente des Schließkörpers durch aus elastisch verformbar sein können. ebenfalls möglich ist, dass die Bewegung von Führungselement und Sperrkörper in Öffnungs- und Schließrichtung steif miteinander gekoppelt sind, während quer zur Schließrichtung elastische Verformungen möglich sind.

Abweichend hierzu ist gemäß EP 1 291 563 A2 der Schließkörper, der in diesem Fall als zu einem Ring gebogenes Band ausgebildet ist, ein elastisches Kontinuum, bei dem ohne eine gleitende oder wälzende Führungsbewegung die Bewegung des Schließkörpers mit einer elastischen Verformung desselben in Öffnungs- und Schließrichtung einhergeht. Problematisch ist für eine derartige Ausführung, dass durch die wirkenden Drücke und eine gewünschte Öffnungscharakteristik bereits die elastischen Kenngrößen des ringförmigen Bands vorgegeben sind. Zusätzlich bildet das Band allerdings eine Dichtfläche mit der Öffnung in der Schließstellung aus, für die u. U. andere Anforderungen an mechanische Kenngrößen des Bandes wie die Steifigkeit gelten. Beispielsweise muss eine Anlage des Bands um die gesamte Umfangsfläche der Öffnung bei den wirkenden Druckverhältnissen werden. Ein Eintreten des Bands infolge elastischer Verformungen in die Öffnung ist ebenso zu vermeiden wie eine unerwünschte teilweise Freigabe der Öffnung über einen Teilumfang der Öffnung. Probleme können weiterhin infolge des elastischen Bands entstehen bei stoßartiger Druckänderung, dynamischen Strömungsbedingungen, beispielsweise mit einem zunehmenden Schließen eines Ringspalts zwischen dem Band und der Öffnung. Aus den genannten, u. U. unterschiedlichen Anforderungen an die Gestaltung der Steifigkeit des ringförmigen Bands gemäß EP 1 291 563 A2 ergibt sich u. U. ein Zielkonflikt.

Der vorgenannten Erkenntnis wird erfindungsgemäß dadurch Rechnung getragen, dass einerseits eine Kopplung zwischen dem Führungselement und dem Sperrkörper derart erfolgt, dass diese Bauelemente während der Bewegung des Schließkörpers gemeinsam bewegt werden. Hierdurch liegt zunächst ein definiertes Bewegungsverhalten für Führungselement und Sperrkörper vor. Zusätzlich zu dem Führungselement und dem Sperrkörper ist ein Federelement vorgesehen, welches damit auch separat ausgelegt werden kann und besonders an die gewünschte Öffnungs- und Schließcharakteristik des Rückschlagventils angepasst werden kann. Das Federelement beaufschlagt hierbei den Schließkörper in radialer Richtung in Richtung der Schließstellung, so dass mit einem Abfall der Druckdifferenz auf beiden Seiten des Schließkörpers als "default"-Stellung die Schließstellung eingenommen wird.

Der Rahmen der Erfindung wird hierbei nicht dadurch verlassen, wenn für eine Schließbewegung nicht allein das Federelement verantwortlich ist, sondern Kräfte zur Herbeiführung einer Schließstellung durch statische oder dynamische Hydraulikbedingungen an den Wirkflächen des Schließkörpers unterstützt werden.

Weiterhin ist darauf hinzuweisen, dass die erfindungsgemäße Ausgestaltung nicht zwingend erfordert, dass Führungselement und Sperrkörper starr miteinander gekoppelt sind. Ebenfalls denkbar ist eine elastische Kopplung von Führungselement und Sperrkörper, wobei in jedem Fall eine Bewegung des Führungselements mit einer Bewegung des Sperrkörpers korreliert, u. U. allerdings mit unterschiedlichem Ausmaß.

Bei dem erfindungsgemäßen Federelement kann es sich um ein beliebiges Federelement handeln, insbesondere ein Federelement aus einem Federstahl, eine Druck- und/oder Zug-Feder, eine Spiralfeder, eine Feder aus einem Verbundmaterial, ein elastomeres Federelement, ein Federelement mit integriertem Dämpfungselement, eine lineare oder nicht lineare Feder, eine mit Stahl oder einem anderen Werkstoff mit geringer innerer Reibung gebildete Feder, eine Schrauben-, Torsions-, Blatt-, Teller-, Ringfeder, eine Wurmfeder, eine Rollfeder, eine Hülsenfeder, eine Schlitzfeder, eine gewickelte Feder mit zylindrischer oder kegeliger Windung oder ebener Windung, eine Torsionsfeder mit einem Drehstab oder Drehrohr, eine Blattfeder, eine Tellerfeder, eine tiefgezogene Scheibenfeder, eine Ringfeder, eine Feder aus Kunststoff oder Gummi mit oder ohne Gas- oder Flüssigkeitsfüllung, eine Verbundfeder Gummi-Metall, eine Feder aus faserverstärktem Kunststoff, eine Feder mit Hohlräumen oder Öffnungen, Ansätzen, Anschlägen, Rippen, Zacken an mindestens einer Oberfläche, eine Feder mit einem elastischen Werkstoff zwischen einer starren Außenhülse und einer starren Innenhülse oder einem starren Innenbolzen, eine Federeinheit aus mehreren einzelnen Federelementen gleicher oder unterschiedlicher Materialien und/oder Bauart, eine Flüssigkeitsfeder. Ebenfalls möglich ist die Zusammenfassung mehrerer gleicher oder unterschiedlicher Federn der vorgenannten Typen in mechanischer Reihen- oder Parallelschaltung zu einem Federelement.

Eine besonders einfache Ausgestaltung der Erfindung ist gegeben, wenn das Federelement integraler Bestandteil des Schließkörpers ist. Ein derartiges Federelement ist gemeinsam mit dem Schließkörper besonders einfach zu fertigen, wodurch sich auch die Bauteilvielzahl verringert und u. U. das Gewicht reduziert werden kann. Beispielsweise handelt es sich bei dem Schließkörper mit dem integral ausgebildeten Federelement um ein Form- oder Spritzgussteil aus einem elastischen Kunststoff. Auch der Einsatz eines Verbundkörpers, beispielsweise mit einem mit Kunststoff ummantelten Federstahl, ist möglich.

Gemäß einer weiteren Ausgestaltungsform der Erfindung ist der Schließkörper in erster Näherung U-förmig ausgebildet und besitzt einen Grundschenkel und zwei parallele Seitenschenkel. Hierbei kann der Grundschenkel gekrümmt ausgebildet sein und eine außenliegende Fläche aufweisen, die der Fläche einer Kontur der Ausnehmung des Gehäuses zur Aufnahme des Steuerkolbens angepasst ist oder zumindest der Begrenzungskontur der Öffnung angepasst ist. Damit kann der Grundschenkel auf einfache Weise den Sperrkörper bilden. Gleichzeitig kann mindestens ein Seitenschenkel als Führungselement genutzt werden, welches an einer Führungsfläche des Steuerkolbens führend anliegt. Beispielsweise erstreckt sich der Seitenschenkel somit Öffnungs- und Schließrichtung, so dass mit diesem die Führungsrichtung auf einfache Weise vorgegeben werden kann.

Für den Fall, dass grundsätzlich für den Sperrkörper , evtl. auch für das Führungselement, ein verhältnismäßig starres Material gewählt ist, erfordert eine gewünschte Schließwirkung, dass der Sperrkörper gleichmäßig über die gesamte Begrenzung der Öffnung an dieser anliegt, da sonst eine unerwünschte Leckage auftreten würde. Im Extremfall bedeutet dies zusätzlich, dass eine Führung des Schließkörpers exakt vertikal zu der Begrenzung der Öffnung erfolgen muss. Die gewünschte Schließwirkung kann zuverlässig und auf einfache Weise dadurch gewährleistet oder verstärkt werden, dass im Bereich des Sperrkörpers oder des Grundschenkels ein elastisches Dichtelement von dem Schließkörper ausgebildet ist. Bei einem derartigen Dichtelement kann es sich um ein an dem Grundschenkel befestigtes zusätzliches Bauelement wie einen Dichtkörper handeln, der beispielsweise stoffschlüssig an den Grundschenkel angebunden ist. Ebenfalls möglich ist eine Beschichtung des Grundschenkels mit einem elastischen Material. Für eine derartige Ausgestaltung kann eine zuverlässige Schließstellung bspw. auch dann gewährleistet werden, wenn infolge von Toleranzen oder Verschleiß die Schließbewegung nicht wie zuvor erläutert exakt geführt ist. Das elastische Dichtelement kann mit dem Erreichen der Schließstellung zunehmend beaufschlagt, wobei zumindest ein Teil der Beaufschlagung des elastischen Dichtelements von dem Federelement erzeugt ist.

Für die Bereitstellung des Federelements ergibt sich eine besonders kompakte Ausgestaltung, wenn von dem Grundschenkel des Schließkörpers innenliegend unter einem spitzen Winkel ein Federsteg auskragt, der federnd belastet wird unter Verringerung des genannten spitzen Winkels. Ein Endbereich des Federstegs kann elastisch gegenüber dem Steuerkolben abgestützt sein. Neben der kompakten Ausgestaltung hat eine derartige Ausgestaltung den Vorteil, dass das als Federsteg ausgebildete Federelement in einem Querschnitt von dem Steuerkolben, den Seitenschenkeln und dem Grundschenkel umgeben sein kann, so dass eine gewisse Schutzwirkung für das Federelement gegeben ist. Der Schließkörper kann zur Gewährleistung einer weiteren Funktion in einem dem Grundschenkel gegenüberliegenden Endbereich des Seitenschenkels eine Nase aufweisen, die vorzugsweise ebenfalls integral mit den weiteren Bestandteilen des Schließkörpers gebildet ist. Eine derartige Nase kann eine Rastierung oder einen Anschlag mit dem Steuerkolben ausbilden, wodurch beispielsweise eine Endlage des Schließkörpers vorgegeben und/oder eine Montagehilfe gegeben sein kann, die ein unbeabsichtigtes Lösen des Schließkörpers von dem Steuerkolben vermeidet.

Eine weitere Funktion kann von den Seitenschenkeln übernommen werden, wenn diese zumindest eine Durchströmungsöffnung aufweisen, durch die ein Druckmittel in der Öffnungsstellung des Schließkörpers hindurchtreten kann.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft, ohne dass diese zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Kurze Beschreibung der Zeichnungen

Weitere Merkmale der Erfindung ergeben sich aus der folgenden Beschreibung und den zugehörigen Zeichnungen, in denen Ausführungsbeispiele der Erfindung schematisch dargestellt sind. Es zeigen:

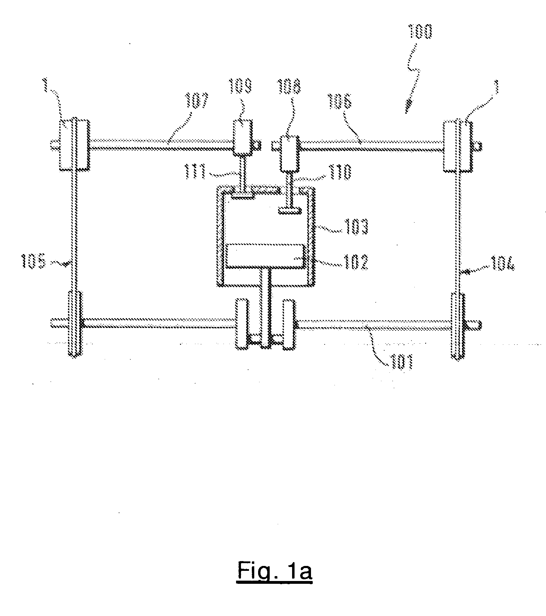

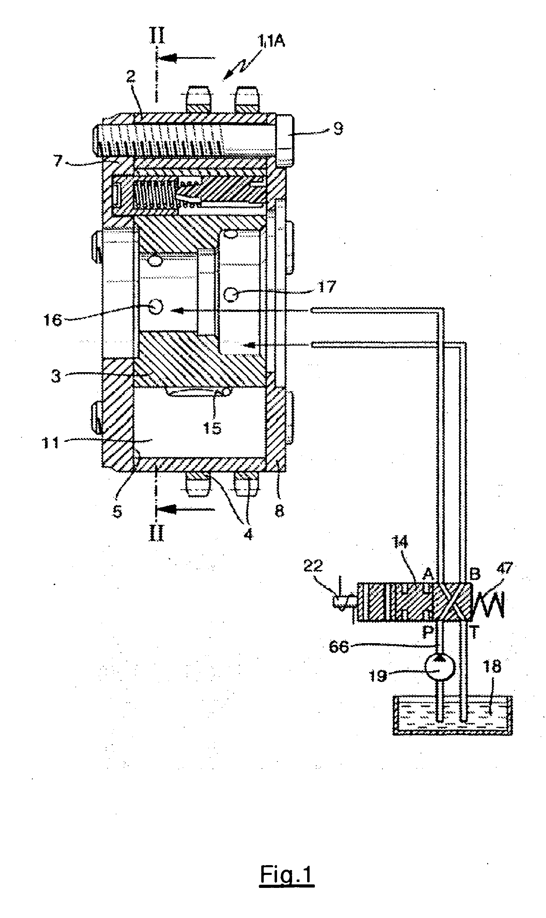

- Figur 1a: nur sehr schematisch eine Brennkraftmaschine,
- Figur 1: einen Längsschnitt durch eine Vorrichtung zur Verände- rung der Steuerzeiten einer Brennkraftmaschine mit Druckmittelkreislauf,
- Figur 2: einen Querschnitt durch die in Figur 1 dargestellte Vorrich- tung entlang der Linie II-II,
- Figur 3: einen Längsschnitt durch ein Steuerventil,
- Figur 4: eine perspektivische Ansicht einer ersten Ausführungsform eines Steuerventils,
- Figur 5: eine perspektivische Ansicht des Schließkörpers aus Figur 4,
- Figur 6a: einen Querschnitt durch das Steuerventil aus Figur 4 im Bereich des Zulaufanschlusses, welches in einer Umge- bungskonstruktion angeordnet ist,
- Figur 6b: einen Querschnitt analog Figur 6a,
- Figur 7a: einen Querschnitt durch das Steuerventil analog zu Figur 6a mit einem modifizierten Schließkörper,
- Figur 7b: einen Querschnitt durch das Steuerventil analog zu Figur 6b mit einem weiteren, modifizierten Schließkörper,
- Figur 8: eine perspektivische Ansicht einer zweiten Ausführungs- form eines Steuerventils,
- Figur 9: eine perspektivische, teilweise geschnittene Ansicht des Rückschlagventils nach Figur 8,
- Figur 10: eine perspektivische Darstellung eines erfindungsgemäßen Steuerventils mit einem Schließkörper und einem integral von dem Schließkörper ausgebildeten Federelement in ei- ner Schließstellung,
- Figur 11: das Steuerventil gemäß Figur 10 in perspektivischer Dar- stellung in einer Öffnungsstellung des Schließkörpers und
- Figur 12: eine weitere erfindungsgemäße Ausgestaltung eines Steu- erventils in perspektivischer Darstellung, bei der ein Feder- element als spiralförmige Druckfeder ausgebildet ist,
- Figur 13: einen schematischen Querschnitt einer weiteren Ausfüh- rungsform eines erfindungsgemäßen Steuerventils mit ei- nem Rückschlagventil und endseitig im Bereich von Seiten- schenkeln des Schließkörpers angeordneten Federelemen- ten und
- Figur 14: eine im Wesentlichen Figur 7b entsprechende Ausgestal- tung eines erfindungsgemäßen Steuerventils mit einem zwischen Steuerkolben und einem Sperrkörper des Schließkörpers angeordneten elastomeren Federelement.

### Ausführliche Beschreibung der Erfindung

In Figur 1a ist eine Brennkraftmaschine 100 skizziert, wobei ein auf einer Kurbelwelle 101 sitzender Kolben 102 in einem Zylinder 103 angedeutet ist. Die Kurbelwelle 101 steht in der dargestellten Ausführungsform über je einen Zugmitteltrieb 104 bzw. 105 mit einer Einlassnockenwelle 106 bzw. Auslassnockenwelle 107 in Verbindung, wobei eine erste und eine zweite Vorrichtung 1 zur variablen Einstellung der Steuerzeiten von Gaswechselventilen 110, 111 für eine Relativdrehung zwischen Kurbelwelle 101 und Nockenwellen 106, 107 sorgen können. Nocken 108, 109 der Nockenwellen 106, 107 betätigen ein Einlassgaswechselventil 110 bzw. ein Auslassgaswechselventil 111. Ebenso kann vorgesehen sein, nur eine der Nockenwellen 106, 107 mit einer Vorrichtung 1 auszustatten oder nur eine Nockenwelle 106, 107 vorzusehen, welche mit einer Vorrichtung 1 versehen ist.

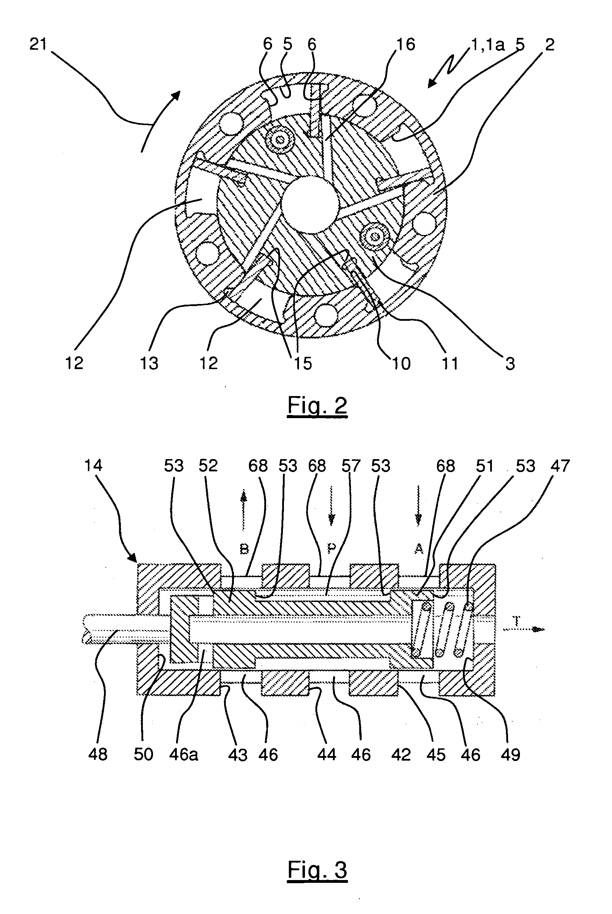

Die Figuren 1 und 2 zeigen eine hydraulische Verstellvorrichtung 1a einer Vorrichtung 1 zur variablen Einstellung der Steuerzeiten von Gaswechselventilen 110, 111 einer Brennkraftmaschine 100. Die Verstellvorrichtung 1a besteht im Wesentlichen aus einem Stator 2 und einem konzentrisch dazu angeordneten Rotor 3. Ein Antriebsrad 4 ist drehfest mit dem Stator 2 verbunden und in der dargestellten Ausführungsform als Kettenrad ausgebildet. Ebenso denkbar sind Ausführungsformen des Antriebsrads 4 als Riemen- oder Zahnrad. Der Stator 2 ist drehbar auf dem Rotor 3 gelagert, wobei an der Innenmantelfläche des Stators 2 in der dargestellten Ausführungsform fünf in Umfangsrichtung beabstandete Ausnehmungen 5 vorgesehen sind. Die Ausnehmungen 5 werden in radialer Richtung vom Stator 2 und dem Rotor 3, in Umfangsrichtung von zwei Seitenwänden 6 des Stators 2 und in axialer Richtung durch einen ersten und einen zweiten Seitendeckel 7, 8 begrenzt. Jede der Ausnehmungen 5 ist auf diese Weise druckdicht verschlossen. Der erste und der zweite Seitendeckel 7, 8 sind mit dem Stator 2 mittels Verbindungselementen 9, beispielsweise Schrauben, verbunden.

An der Außenmantelfläche des Rotors 3 sind axial verlaufende Flügelnuten 10 ausgebildet, wobei in jeder Flügelnut 10 ein sich radial erstreckender Flügel 11 angeordnet ist. In jede Ausnehmung 5 erstreckt sich ein Flügel 11, wobei die Flügel 11 in radialer Richtung am Stator 2 und in axialer Richtung an den Seitendeckeln 7, 8 anliegen. Jeder Flügel 11 unterteilt eine Ausnehmung 5 in zwei gegeneinander arbeitende Druckkammern 12, 13. Um ein druckdichtes Anliegen der Flügel 11 am Stator 2 zu gewährleisten, sind in den Flügelnuten 10 Blattfederelemente 15 angeordnet, die den Flügel 11 in radialer Richtung mit einer Kraft beaufschlagen.

Mittels ersten und zweiten Druckmittelleitungen 16, 17 können die ersten und zweiten Druckkammern 12, 13 über ein Steuerventil 14 mit einer Druckmittelpumpe 19 oder einem Tank 18 verbunden werden. Dadurch wird ein Stellantrieb ausgebildet, der eine Relativverdrehung des Stators 2 gegenüber dem Rotor 3 ermöglicht. Das Steuerventil 14 ist mit zwei Arbeitsanschlüssen A, B versehen, welche über Druckmittelkanäle mit den Druckmittelleitungen 16, 17 kommunizieren. Des Weiteren sind ein Tank- T und ein Zulaufanschluss P vorgesehen. Über den Tankanschluss T ist das Steuerventil 14 mit einem Tank 18 verbunden. Mittels einer Druckmittelleitung 66 ist der Zulaufanschluss P mit der Druckmittelpumpe 19 verbunden. Mittels einer Stelleinheit 22 kann das Steuerventil 14 in mehrere Steuerstellungen überführt werden, in denen unterschiedliche Anschlüsse A, B, P, T miteinander kommunizieren. Dabei ist vorgesehen, dass entweder alle ersten Druckkammern 12 mit der Druckmittelpumpe 19 und alle zweiten Druckkammern 13 mit dem Tank 18 verbunden werden bzw. die genau entgegen gesetzte Konfiguration. Werden die ersten Druckkammern 12 mit der Druckmittelpumpe 19 und die zweiten Druckkammern 13 mit dem Tank 18 verbunden, so dehnen sich die ersten Druckkammern 12 auf Kosten der zweiten Druckkammern 13 aus. Daraus resultiert eine Verschiebung der Flügel 11 in Umfangsrichtung in der durch den ersten Pfeil 21 dargestellten Richtung. Durch das Verschieben der Flügel 11 wird der Rotor 3 relativ zum Stator 2 verdreht. Daraus resultiert eine Phasenverschiebung zwischen Nockenwelle 106, 107 und Kurbelwelle 101. Durch gezieltes Ein- bzw. Ableiten von Druckmittel in die bzw. aus den Druckkammern 12, 13 können somit die Steuerzeiten der Gaswechselventile 110, 111 der Brennkraftmaschine 100 gezielt variiert werden.

Des Weiteren ist eine Steuerstellung vorgesehen, in der beide Arbeitsanschlüsse A, B entweder nur mit dem Zulaufanschluss P oder weder mit dem Zulauf- P noch mit dem Tankabschluss T verbunden sind. In dieser Steuerstellung des Steuerventils 14 wird die relative Phasenlage des Rotors 3 zum Stator gehalten. Um zu vermeiden, dass in der Vorrichtung 1 entstehende Druckspitzen zur Druckmittelpumpe 19 gelangen, ist zwischen dieser und dem Inneren des Steuerventils 14, wie noch dargelegt wird, ein Rückschlagventil vorgesehen.

Die Figur 3 zeigt schematisch einen Längsschnitt durch ein Steuerventil 14. Das Steuerventil 14 besteht aus einem Ventilgehäuse 41 und einem Steuerkolben 42. Das Ventilgehäuse 41 ist im Wesentlichen hohlzylindrisch mit einer Ausnehmung 203 ausgeführt, wobei in dessen Außenmantelfläche drei axial beabstandete Ringnuten 43, 44, 45 ausgebildet sind. Jede der Ringnuten 43 bis 45 stellt einen Anschluss des Steuerventils 14 dar, wobei die in axialer Richtung äußeren (erste und dritte) Ringnuten 43, 45 die Arbeitsanschlüsse A, B bilden und die mittlere (zweite) Ringnut 44 den Zulaufanschluss P. Ein Tankanschluss T ist durch eine Öffnung in einer Stirnseite des Ventilgehäuses 41 ausgeführt. Jede der Ringnuten 43 bis 45 steht über erste Radialöffnungen 46 mit dem Inneren des Ventilgehäuses 41 in Verbindung. Innerhalb des Ventilgehäuses 41 ist ein im Wesentlichen hohlzylindrisch ausgeführter Steuerkolben 42 axial verschiebbar angeordnet. Der Steuerkolben 42 wird an einer Stirnseite von einem Federelement 47 und an der gegenüberliegenden Stirnfläche von einer Stößelstange 48 einer Stelleinheit 22 mit einer Kraft beaufschlagt. Durch Bestromen der Stelleinheit 22 kann der Steuerkolben 42 gegen die Kraft des Federelements 47 in eine beliebige Position zwischen einem ersten und einem zweiten Endanschlag 49, 50 verschoben werden.

Der Steuerkolben 42 ist mit einem ersten und einem zweiten Ringsteg 51, 52 versehen. Die Außendurchmesser der Ringstege 51, 52 sind dem Innendurchmesser des Ventilgehäuses 41 angepasst. Zwischen den Ringstegen 51, 52 ist am Steuerkolben 42 eine vierte Ringnut 57 ausgebildet. Weiterhin sind in den Steuerkolben 42 zwischen dessen stirnseitigem Ende, an dem die Stößelstange 48 angreift, und dem zweiten Ringsteg 52 zweite Radialöffnungen 46a ausgebildet, wodurch das Innere des Steuerkolbens 42 mit dem Inneren des Ventilgehäuses 41 in Verbindung steht. Der erste und der zweite Ringsteg 51, 52 sind derart ausgebildet und an der Außenmantelfläche des Steuerkolbens 42 angeordnet, dass Steuerkanten 53 in Abhängigkeit von der Stellung des Steuerkolbens 42 relativ zum Ventilgehäuse 41 eine Verbindung zwischen dem Zulaufanschluss P und den Arbeitsanschlüssen A, B über die vierte Ringnut 57 freigeben oder sperren. Gleichzeitig wird eine Verbindung zwischen den Arbeitsanschlüssen A, B und dem Tankanschluss T freigegeben oder versperrt. Durch Einflussnahme auf die Stellung des Steuerkolbens 42 innerhalb des Ventilgehäuses 41 kann gezielt den ersten oder den zweiten Druckkammern 12, 13 Druckmittel zugeführt und aus den jeweils anderen Druckkammern 12, 13 abgeführt werden, wodurch die Phasenlage der Nockenwelle 106, 107 relativ zur Kurbelwelle 101 gezielt verändert werden kann.

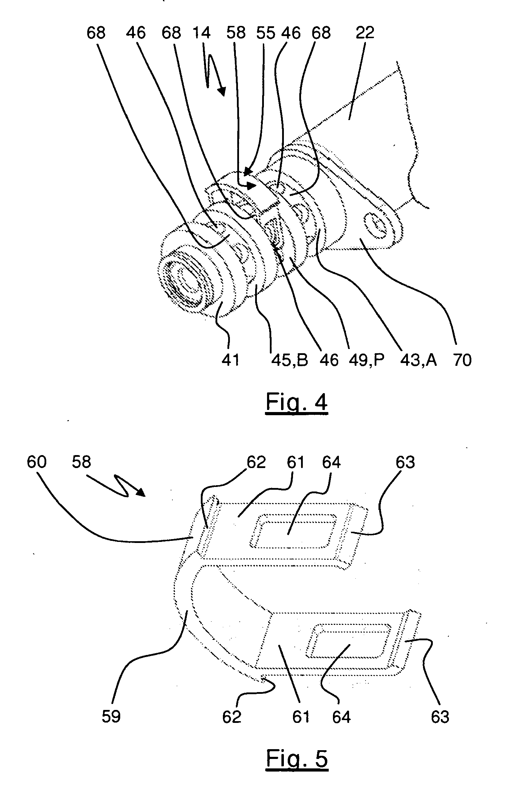

Figur 4 zeigt ein erfindungsgemäßes Steuerventil 14 in einer perspektivischen Darstellung. Dargestellt sind ein Ventilgehäuse 41, eine Stelleinheit 22 und ein Schließkörper 58 eines Rückschlagventils 54. Der Schließkörper 58 ist in der zweiten Ringnut 44 angeordnet und besteht aus einem starren, nur wenig flexiblen Material, beispielsweise einem Kunststoff. Zwischen der Stelleinheit 22 und dem Ventilgehäuse 41 ist ein Montageflansch 70 mit einer Bohrung vorgesehen, mittels derer das Steuerventil 14 an einer Umgebungskonstruktion (in dieser Figur nicht dargestellt) befestigt werden kann.

Figur 5 zeigt eine perspektivische Ansicht des Schließkörpers 58. Dieser besteht aus einem Sperrkörper 59 mit einer Dichtfläche 60 und Führungselementen 61, die in der dargestellten Ausführungsform als Führungsstege ausgebildet sind. Des Weiteren sind an dem Sperrkörper 59 Anströmflächen 62 ausgebildet, welche über die Führungselemente 61 hinausragen. An den Führungselementen 61 sind als Nasen 63 ausgeführte Halteelemente und Durchströmungsöffhungen 64 ausgebildet.

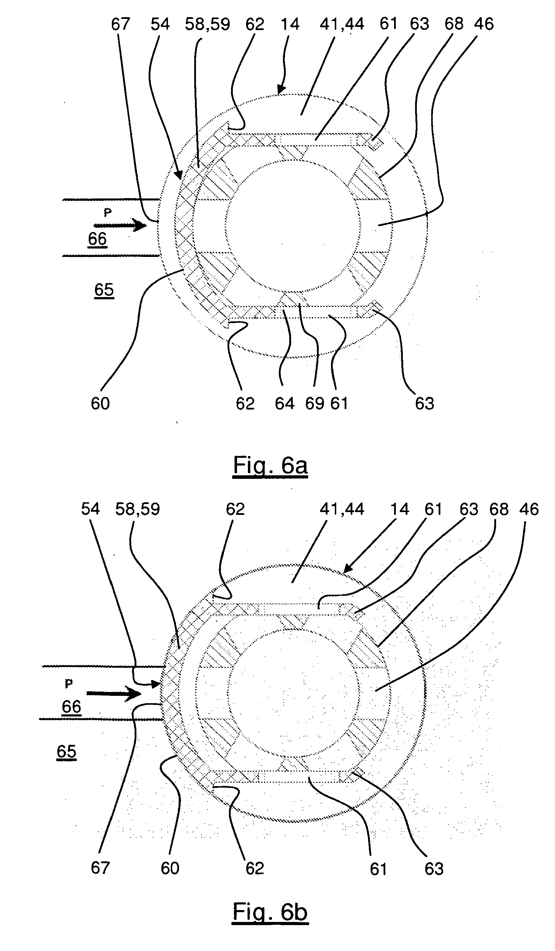

Die Figuren 6a und 6b zeigen ein erfindungsgemäßes Steuerventil 14, analog zu dem in Figur 4 dargestellten, im Querschnitt, wobei die Schnittebene im Bereich des Zulaufanschlusses P liegt. Das Steuerventil 14 ist in dieser Darstellung in einer Umgebungskonstruktion 65 montiert. In der Umgebungskonstruktion 65 ist eine Druckmittelleitung 66 ausgebildet, welche die zweite Ringnut 44 mit einer Druckmittelpumpe (nicht dargestellt) verbindet. Die Druckmittelleitung 66 kommuniziert über eine in der Wandung der Umgebungskonstruktion 65 ausgebildete Öffnung 67 mit der zweiten Ringnut 44. Der Schließkörper 58 ist derart in der zweiten Ringnut 44 angeordnet, dass die Dichtfläche 60 des Sperrkörpers 59 in Richtung der Öffnung 67 orientiert ist.

Der Nutgrund 68 der zweiten Ringnut 44 ist mit zwei Abflachungen 69 versehen, wobei diese derart ausgebildet sind, dass die als Führungsstege ausgebildeten Führungselemente 61 im montierten Zustand des Schließkörpers 58 an diesen anliegen. Die Abflachungen 69 dienen somit als Führungsflächen für den Schließkörper 58. Die Abflachungen 69 sind in einer definierten Orientierung zur Bohrung des Montageflansches 70 ausgebildet. Dadurch erfüllen diese zum einen die Funktion, dass der Schließkörper 58 in der korrekten Orientierung zur Öffnung 67 auf dem Ventilgehäuse 41 montiert wird. Der Montageflansch 70 gibt die Orientierung des Ventilgehäuses 41 innerhalb der Umgebungskonstruktion 65 vor und die Abflachungen 69 geben die Orientierung des Sperrkörpers 59 in der zweiten Ringnut 44 vor. Des Weiteren übernehmen die Führungselemente 61 während des Betriebs der Brennkraftmaschine 100 eine Führungsfunktion, wodurch der Schließkörper 58 ausschließlich in radialer Richtung des Ventilgehäuses 41 bewegt werden kann.

In Figur 6a ist das Rückschlagventil 54 in seinem geöffneten Zustand dargestellt. Druckmittel, welches über die Öffnung 67 in die zweite Ringnut 44 eintritt, drängt den Sperrkörper 59 und damit den Schließkörper 58 gegen den Nutgrund 68 der zweiten Ringnut 44. Das Druckmittel kann nun über die zweite Ringnut 44, die Durchströmungsöffnungen 64 und die ersten Radialöffnungen 46 in das Innere des Ventilgehäuses 41 gelangen.

Bei umgekehrtem Druckmittelfluss vom Inneren des Ventilgehäuses 41 in Richtung der Öffnung 67 steht das Druckmittel an der Rückseite des Sperrkörpers 59 und an den Anströmflächen 62 an. Dadurch wird der Schließkörper 58, geführt von den Führungselementen 61, in Richtung der Öffnung 67 bewegt, bis der Schließkörper 58 an der Wandung der Umgebungskonstruktion 65 zum Anliegen kommt. Dieser gesperrte Zustand des Rückschlagventils 54 ist in Figur 6b dargestellt. In diesem Zustand ist die Öffnung 67 durch den Sperrkörper 59 blockiert und in der Vorrichtung 1 entstehende Druckspitzen können sich nicht über die Druckmittelleitung 66 bis zur Druckmittelpumpe fortpflanzen.

In diesem Zustand des Rückschlagventils 54 liegen die Nasen 63 am Nutgrund 68 der zweiten Ringnut 44 an. Während des Transportes des Steuerventils 14 dienen diese Nasen 63 somit als Verliersicherung. Während der Montage sorgen die Nasen 63 weiterhin dafür, dass der Sperrkörper 59 nicht über den Rand der zweiten Ringnut 44 hinausragt. Somit ist gewährleistet, dass der Sperrkörper 59 während des Einpressvorgangs des Steuerventils 14 in die Umgebungskonstruktion 65 nicht beschädigt wird oder gar abschert und ein Klemmen des Steuerventils 14 in der Umgebungskonstruktion 65 verursacht.

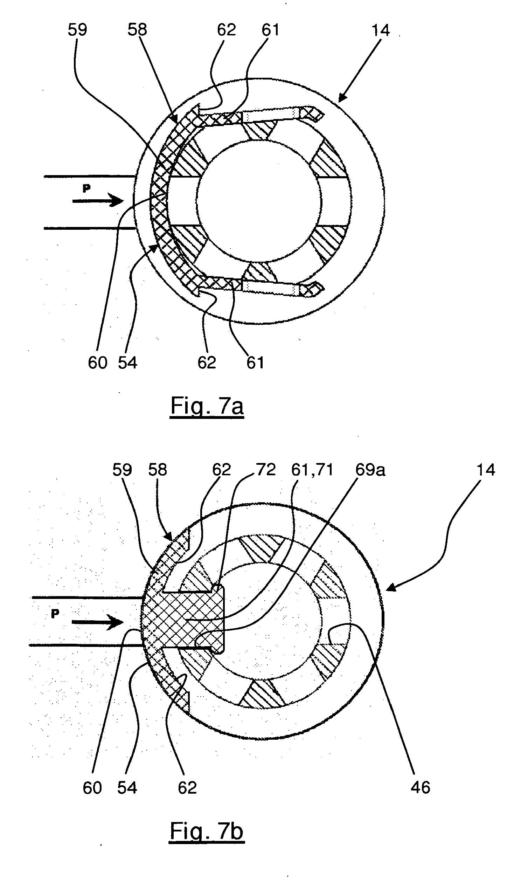

Die Figur 7a zeigt eine Darstellung eines erfindungsgemäßen Steuerventils 14 analog Figur 6a mit einem modifizierten Schließkörper 58. Im Unterschied zu der vorhergehenden Ausführungsform sind hier die als Führungsstege ausgebildeten Führungselemente 61 und die korrespondierenden Abflachungen 69 unter einem bestimmten Winkel zueinander ausgebildet. Dies hat den Vorteil, dass der Schließkörper 58 in nur genau einer Orientierung in der zweiten Ringnut 44 montiert werden kann. Somit sind Fehlorientierungen des Schließkörpers 58 ausgeschlossen.

Figur 7b zeigt eine weitere Darstellung eines erfindungsgemäßen Steuerventils 14 analog Figur 6b mit einem weiteren, modifizierten Schließkörper 58. Das Führungselement 61 ist in diesem Fall als Zapfen 71 ausgebildet, der zentral an der Rückseite des Sperrkörpers 59 angeordnet ist. Der Zapfen 71 greift in eine der ersten Radialöffnungen 46 der zweiten Ringnut 44 ein. Dabei dient eine ringförmige Wandung 69a der Radialöffnung 46 als Führungsfläche für den Schließkörper 58. Um während der Montage die korrekte Orientierung des Schließkörpers 58 sicherzustellen, ist vorteilhafterweise die zur Führung des Schließkörpers 58 bestimmte Radialöffnung 46 größer ausgeführt als die restlichen Radialöffnungen 46 und der Zapfen 71 der Abmessung der größeren der Radialöffnungen 46 angepasst. Um ein sicheres Schließen des Rückschlagventils 54 zu gewährleisten, ist die Außenmantelfläche des Zapfens vorteilhafterweise profiliert ausgebildet. Dadurch kann Druckmittel durch die den Zapfen 71 aufnehmende Radialöffnung 46 fließen und den Sperrkörper 59 anströmen.

Am vom Sperrkörper 59 abgewandten Ende des Zapfens 71 ist ein ringförmig umlaufender Wulst 72 an diesem angebracht, welcher als Halteelement dient.

Neben der Anordnung des Schließkörpers 58 in der zweiten Ringnut 44 zwischen dem Ventilgehäuse 41 und einer Umgebungskonstruktion 65 ist es natürlich auch denkbar, diesen innerhalb der vierten Ringnut 57 zwischen dem Steuerkolben 42 und dem Ventilgehäuse 41 anzuordnen. Dies kann beispielsweise in der in der JP 07-229408 dargestellten Ausführungsform eines Steuerventils 14 realisiert sein.

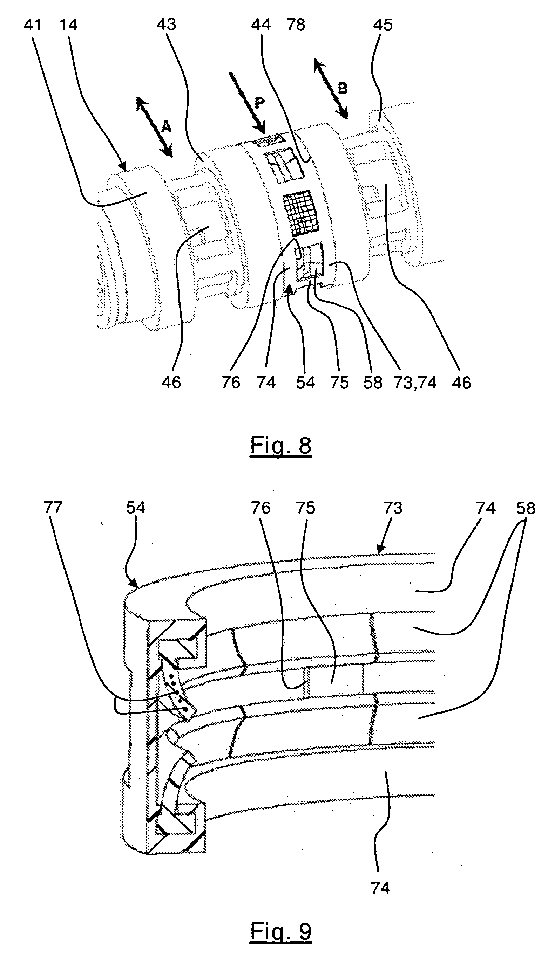

Die Figur 8 zeigt eine weitere erfindungsgemäße Ausführungsform eines Steuerventils 14 mit einer anderen Variante eines Rückschlagventils 54. Figur 9 zeigt das Rückschlagventil 54 in einer perspektivischen, teilweise geschnittenen Darstellung. Das Rückschlagventil 54 besteht aus einem starren Rahmen 73 und zwei flexiblen Schließkörpern 58.

Der Rahmen 73 weist zwei ringförmige Abschnitte 74 auf, die über mehrere Abstützstreben 75 miteinander verbunden sind. Die Abstützstreben 75 werden durch mehrere in Umfangsrichtung beabstandete Aussparungen 76 voneinander getrennt. Die Erstreckung des Rahmens 73 in axialer Richtung entspricht der Erstreckung der zweiten Ringnut 44. Dadurch ist gewährleistet, dass der Rahmen 73 druckdicht an den die zweite Ringnut 44 begrenzenden Ringflächen anliegt und somit der Druckmittelfluss nur über die Aussparungen 76 erfolgen kann. Des Weiteren erstreckt sich der Rahmen 73 in Umfangsrichtung entlang der gesamten zweiten Ringnut 44. In radialer Richtung innerhalb der Abstützstreben 75 sind zwei flexible Schließkörper 58 angeordnet. Jeder Schließkörper 58 ist als ringförmig gebogenes Band ausgebildet, welches entlang der gesamten inneren Umfangsfläche des Rahmens 73 umläuft. Jeweils eine axiale Seite der Schließkörper 58 ist in dem Rahmen 73 aufgenommen und fest mit diesem verbunden. Dies kann, wie in der Figur dargestellt, mittels formschlüssiger Mittel oder beispielsweise durch teilweises Eingießen der Schließkörper 58 während der Herstellung des Rahmens 73 realisiert werden.

Im Folgenden wird die Wirkungsweise des Rückschlagventils 54 erklärt. Bei Druckmittelfluss in das Innere des Steuerventils 14 werden die flexiblen Schließkörper 58 radial nach innen gedrängt, wodurch die Aussparungen 76 geöffnet werden.

Bei umgekehrtem Druckmittelfluss werden die Schließkörper 58 gegen die Abstützstreben 75 gedrängt, wodurch die Schließkörper 58 aufeinander zum Anliegen kommen und die Aussparungen 76 versperren.

Zusätzlich können in den Schließkörpern 58 Versteifungsstreben 77 vorgesehen sein, welche verhindern, dass die Schließkörper 58 durch die Aussparungen 76 gedrückt werden. Diese Versteifungsstreben 77 sind vorteilhafterweise in Umfangsrichtung orientiert, so dass sie ein Öffnen der Schließkörper 58 nicht behindern. In dieser Ausführungsform eines Rückschlagventils 54 können die Aussparungen 76 mit einem Filtergewebe 78 versehen sein. Dieses kann beispielsweise während der Herstellung des Rahmens 73 in diesen eingegossen werden. Dadurch können die Funktionen eines Ringfilters und die eines Rückschlagventils 54 innerhalb eines Bauteils vereinigt werden. Das Filtergewebe 78 ist in Figur 8 aus Gründen der Klarheit nur in einer der Aussparungen 76 dargestellt. Um die Filterfunktion zu erfüllen ist es natürlich in sämtlichen Aussparungen 76 vorgesehen.

Die Ausbildung der Rückschlagventile 54 nach einer der oben dargestellten Ausführungsformen hat den Vorteil, dass diese innerhalb einer Ringnut 44 des Steuerventils 14 angeordnet sind und somit keinen zusätzlichen Bauraum benötigen. Die Rückschlagventile 54 können einfach montiert werden, wobei sichergestellt ist, dass während der Montage des Steuerventils 14 die Funktion der Rückschlagventile 54 nicht beeinträchtigt wird. Des Weiteren sind alle Ausführungen als Kunststoffspritzgussteile mit integrierter Filterfunktion denkbar.

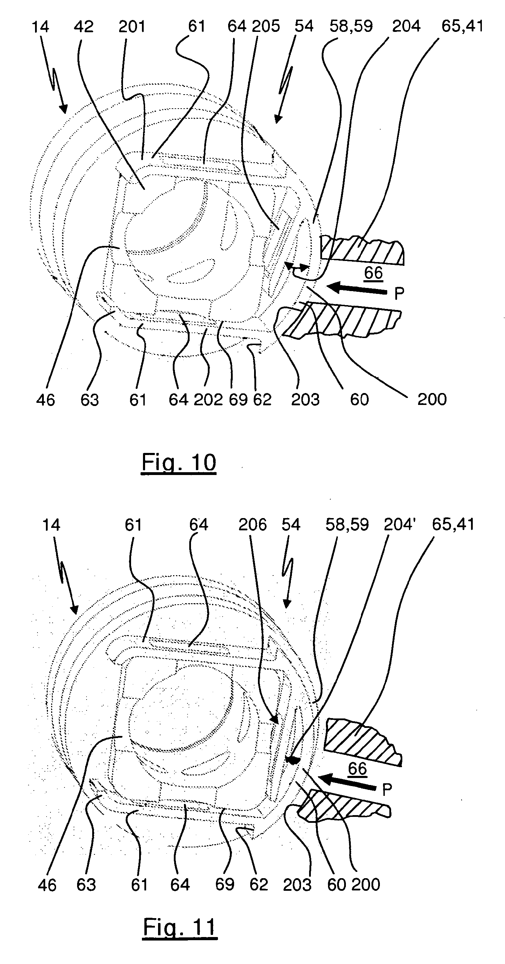

Die in den Figuren 10 bis 12 dargestellten Ausführungsbeispiele eines Steuerventils 14 mit einem Schließkörper 58 entsprechen im Wesentlichen der in den Figuren 6a und 6b dargestellten Ausführungsform. Der Schließkörper 58 ist im Wesentlichen U-förmig ausgebildet mit einem Grundschenkel 200 und zwei ungefähr parallelen Seitenschenkeln 201, 202. Der Grundschenkel 200 ist gekrümmt entsprechend der Ausnehmung 203 des Ventilgehäuses 41. Die Seitenschenkel 201, 202 bilden die Führungselemente 61, die an den Abflachungen 69 des Steuerkolbens 42 anliegen, und besitzen in dem dem Grundschenkel 200 gegenüberliegenden Endbereich die Nasen 63. Von dem Grundschenkel 201 erstreckt sich als ein Federelement 206 unter einem spitzen Winkel 204 ein Federsteg 205, dessen Endbereich an dem Steuerkolben 42 abgestützt ist. Der Federsteg 20 erstreckt sich für das dargestellte Ausführungsbeispiel über ungefähr ⅓ bis ²/₃ des Grundschenkels 200 bei Projektion auf diesen. Der Federsteg 205 ist als integraler Bestandteil des Schließkörpers 58 ausgebildet. Hierzu können in dem Schließkörper 58 federnde Bestandteile, Verankerungen o. ä. integriert sein. Ergänzend kann der Federsteg 205 Durchströmungsöffnungen besitzen.

Figur 10 zeigt den Federsteg 205 unter einem Winkel 204 in der Schließstellung, in der der Sperrkörper 59 dicht an der Ausnehmung 206 anliegt und damit im Bereich der Begrenzungen der Öffnung 67 diese schließt.

Abweichend hierzu ist in Figur 11 der Schließkörper in einer Öffnungsstellung, für die der Grundschenkel 200 in radialer Richtung zu der Längsachse des Steuerkolbens 42 nach innen verschoben ist. Mit einer derartigen Verschiebung geht eine elastische Verformung des Federstegs 205 einher, was zu einer Verringerung des Winkels 204 auf einen Winkel 204' führt.

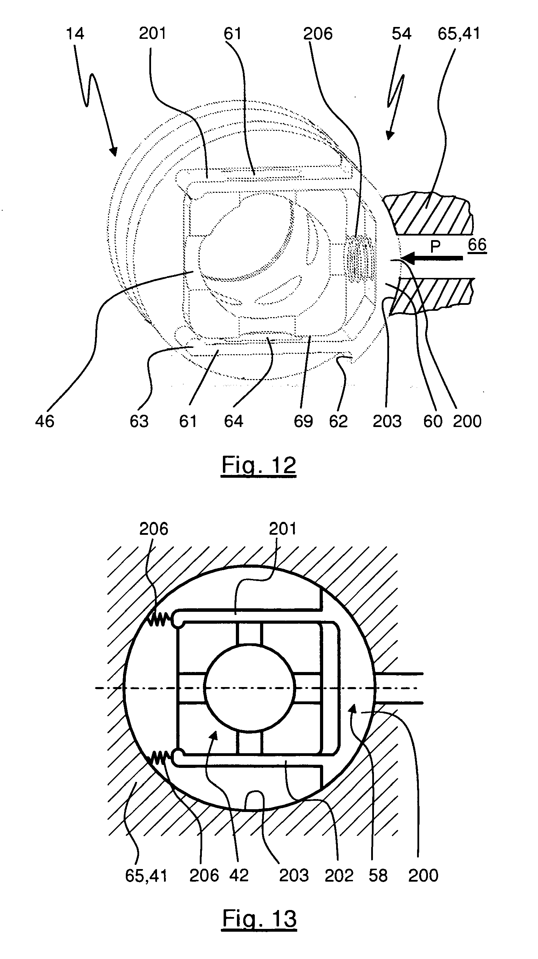

Für eine alternative Ausgestaltung gemäß Figur 12 ist das Federelement 206 anstelle des Federstegs 205 als spiralförmige Druckfeder 206 ausgebildet.

Wie aus Figur 13 ersichtlich ist, können Federelemente 206 auch zwischen den dem Grundschenkel 200 gegenüberliegenden Endbereichen der Seitenschenkel 201, 202 und der Ausnehmung 203 des Ventilgehäuses 41 abgestützt sein.

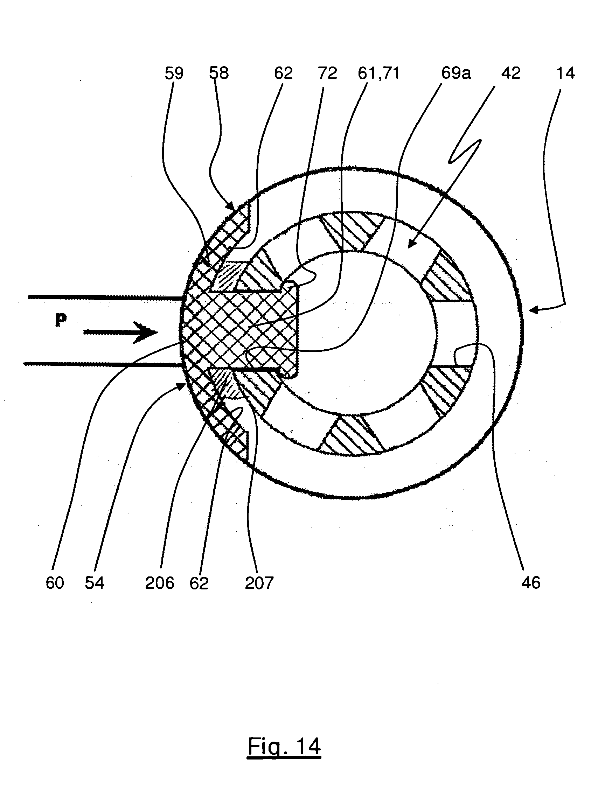

Figur 14 zeigt eine im Wesentlichen Figur 7b entsprechende Ausgestaltung, für die allerdings zwischen den Sperrkörper 59 und eine äußere Mantelfläche 207 des Steuerkolbens 42 ein Federelement 206 zwischengeschaltet ist, welches beispielsweise als Elastomerkörper oder als spiralförmige Druckfeder ausgebildet sein kann und das Führungselement 61 bzw. den Zapfen 71 umgibt.

Für die in Figuren 10 bis 12 dargestellten Ausführungsformen ist der Schließkörper 58 auf den Steuerkolben 42 aufgeklippst.

### Bezugszeichen liste

- 1: Vorrichtung
- 1a: Stellvorrichtung
- 2: Stator
- 3: Rotor
- 4: Antriebsrad
- 5: Ausnehmungen
- 6: Seitenwand
- 7: erster Seitendeckel
- 8: zweiter Seitendeckel
- 9: Verbindungselement
- 10: Flügelnut
- 11: Flügel
- 12: erste Druckkammer
- 13: zweite Druckkammer
- 14: Steuerventil
- 15: Blattfederelement
- 16: erste Druckmittelleitung
- 17: zweite Druckmittelleitung
- 18: Tank
- 19: Druckmittelpumpe
- 21: Pfeil
- 22: Stelleinheit
- 41: Ventilgehäuse
- 42: Steuerkolben
- 43: erste Ringnut
- 44: zweite Ringnut
- 45: dritte Ringnut
- 46: erste Radialöffnungen
- 46a: zweite Radialöffnungen
- 47: Federelement
- 48: Stößelstange
- 49: erster Endanschlag
- 50: zweiter Endanschlag
- 51: erster Ringsteg
- 52: zweiter Ringsteg
- 53: Steuerkante
- 54: Rückschlagventil
- 57: vierte Ringnut
- 58: Schließkörper
- 59: Sperrkörper
- 60: Dichtfläche
- 61: Führungselement
- 62: Anströmflächen 63 Nase
- 64: Durchströmungsöffnung
- 65: Umgebungskonstruktion
- 66: Druckmittelleitung
- 67: Öffnung
- 68: Nutgrund
- 69: Abflachungen
- 69a: Wandung
- 70: Montageflansch
- 71: Zapfen
- 72: Wulst
- 73: Rahmen
- 74: ringförmiger Abschnitt
- 75: Abstützstreben
- 76: Aussparungen
- 77: Versteifungsstreben
- 78: Filtergewebe
- 100: Brennkraftmaschine

- 101: Kurbelwelle
- 102: Kolben
- 103: Zylinder
- 104: Zugmitteltrieb
- 105: Zugmitteltrieb
- 106: Einlassnockenwelle
- 107: Auslassnockenwelle
- 108: Nocken
- 109: Nocken
- 110: Einlassgaswechselventil
- 111: Auslassgaswechselventil

- P: Zulaufanschluss
- T: Tankanschluss
- A: erster Arbeitsanschluss
- B: zweiter Arbeitsanschluss

- 200: Grundschenkel
- 201: Seitenschenkel
- 202: Seitenschenkel
- 203: Ausnehmung
- 204: Winkel
- 205: Federsteg
- 206: Federelement
- 207: Mantelfläche

## Patentansprüche

1. Steuerventil für eine Vorrichtung (1) zur variablen Einstellung von Steuerzeiten von Gaswechselventilen (110, 111) einer Brennkraftmaschine mit
a) einem Ventilgehäuse (41) mit einer in Richtung einer Längsachse orientierten Ausnehmung (203),
b) einem in der Ausnehmung (203) des Ventilgehäuses (41) in unterschiedliche Betriebsstellungen verschieblich angeordneten Steuerkolben (42) und
c) zumindest einer an dem Ventilgehäuse (41) und/oder dem Steuerkolben (42) gebildeten radialen Ausnehmung (Nut 44), die in ausgewählten Betriebsstellungen mit einer in die Ausnehmung (203) mündenden Öffnung (44) des Ventilgehäuses (41) eine Druckmittelverbindung ausbildet und
d) einem Schließkörper (58), der mit der Öffnung (44) ein Rückschlagventil (54) bildet, wobei in einer Schließstellung des Rückschlagventils (54) der Schließkörper (58) die Öffnung (44) verschließt und in einer Öffnungsstellung der Schließkörper (58) die Öffnung (44) freigibt, wobei
e) der Schließkörper (58)
ea) mindestens ein Führungselement (61), welches während einer durch einen Abfall einer Druckdifferenz auf beiden Seiten des Schließkörpers (58) verursachten Schließbewegung zur Führung des Schließkörpers (58) in einem Gleitkontakt mit dem Steuerkolben (42) oder dem Ventilgehäuse (41) steht, sowie
eb) einen Sperrkörper (59)
aufweist, wobei bei einer Bewegung des Schließkörpers (58) zwischen der Öffnungs- und der Schließstellung das Führungselement (61) und der Sperrkörper (59) gemeinsam bewegt werden, und
f) ein Federelement (206) vorgesehen ist, welches den Schließkörper (58) in radialer Richtung sowie in Richtung der Schließstellung beaufschlagt.

2. Steuerventil nach Anspruch 1, **dadurch gekennzeichnet, dass** das Federelement (206)eine Spiralfeder ist.

3. Steuerventil nach Anspruch 1, **dadurch gekennzeichnet, dass** das Federelement (206) integraler Bestandteil des Schließkörpers (58) ist.

4. Steuerventil nach einem der vorhergehenden Ansprüche, **dadurch gekennzeichnet, dass** der Schließkörper (58) in erster Näherung U-förmig ausgebildet ist mit einem Grundschenkel (200) und zwei parallelen Seitenschenkeln (201,202), wobei
a) der Grundschenkel (200) den Sperrkörper (59) bildet und
b) mindestens ein Seitenschenkel (201, 202) das Führungselement (61) bildet, das an einer Führungsfläche (69, 69a) des Steuerkolbens (42) führend anliegt.

5. Steuerventil nach Anspruch 4, **dadurch gekennzeichnet, dass** im Bereich des Grundschenkels (200) ein elastisches Dichtelement ausgebildet ist.

6. Steuerventil nach Anspruch 4 oder 5, **dadurch gekennzeichnet, dass** von dem Grundschenkel (200) innenliegend unter einem spitzen Winkel (204) ein Federsteg (205) auskragt, mit dem der Schließkörper (58) elastisch gegenüber dem Steuerkolben (42) abgestützt ist.

7. Steuerventil nach einem der Ansprüche 4 bis 6, **dadurch gekennzeichnet, dass** mindestens ein Seitenschenkel (201, 202) in dem dem Grundschenkel (200) gegenüberliegenden Endbereich eine Nase (63) aufweist, die eine Rastierung oder einen Anschlag mit dem Steuerkolben (42) ausbildet.

8. Steuerventil nach einem der Ansprüche 4 bis 7, **dadurch gekennzeichnet, dass** mindestens ein Seitenschenkel (201, 202) eine Durchströmungsöffnung (64) besitzt.

## Claims

1. Control valve for a device (1) for the variable adjustment of control times of gas exchange valves (110, 111) of an internal combustion engine, having
a) a valve housing (41) with a recess (203) aligned in the direction of a longitudinal axis,
b) a control piston (42) which is arranged in the recess (203) of the valve housing (41) so as to be movable into different operating positions, and
c) at least one radial recess (groove 44) which is formed on the valve housing (41) and/or on the control piston (42) and which, in selected operating positions, forms a pressure medium connection with an opening (44), which opens into the recess (203), of the valve housing (41), and
d) a closing body (58) which, with the opening (44), forms a check valve (54), with the closing body (58) closing off the opening (44) in a closed position of the check valve (54) and with the closing body (58) opening up the opening (44) in an open position, with
e) the closing body (58) having
ea) at least one guide element (61) which, during a closing movement caused by a drop in a pressure difference on the two sides of the closing body (58), is in sliding contact with the control piston (42) or the valve housing (41) for the guidance of the closing body (58), and
eb) a blocking body (59),
with the guide element (61) and the blocking body (59) being moved together during a movement of the closing body (58) between the open and closed positions, and
f) a spring element (206) being provided which loads the closing body (58) in the radial direction and in the direction of the closed position.

2. Control valve according to Claim 1, **characterized in that** the spring element (206) is a spiral spring.

3. Control valve according to Claim 1, **characterized in that** the spring element (206) is an integral constituent part of the closing body (58).

4. Control valve according to one of the preceding claims, **characterized in that** the closing body (58) is, as a first approximation, of U-shaped design with a base limb (200) and two parallel side limbs (201, 202), with
a) the base limb (200) forming the blocking body (59) and
b) at least one side limb (201, 202) forming the guide element (61) which bears in a guiding fashion against a guide surface (69, 69a) of the control piston (42).

5. Control valve according to Claim 4, **characterized in that** an elastic sealing element is formed in the region of the base limb (200).

6. Control valve according to Claim 4 or 5, **characterized in that** a spring web (205) projects from the base limb (200) at the inside at an acute angle (204), by means of which spring web (205) the closing body (58) is supported elastically with respect to the control piston (42).

7. Control valve according to one of Claims 4 to 6, **characterized in that** at least one side limb (201, 202) has, in the end region opposite the base limb (200), a lug (63) which forms a latching means or a stop with the control piston (42).

8. Control valve according to one of Claims 4 to 7, **characterized in that** at least one side limb (201, 202) has a throughflow opening (64).

## Revendications

1. Soupape de commande pour un dispositif (1) pour l'ajustement variable des temps de commande de soupapes d'échange de gaz (110, 111) d'un moteur à combustion interne, comprenant :
a) un boîtier de soupape (41) avec un logement (203) orienté dans la direction d'un axe longitudinal,
b) un piston de commande (42) disposé de manière déplaçable dans différentes positions de fonctionnement dans le logement (203) du boîtier de soupape (41), et
c) au moins un logement radial (rainure 44) formé sur le boîtier de soupape (41) et/ou le piston de commande (42), qui dans des positions de fonctionnement sélectionnées, forme avec une ouverture (44) du boîtier de soupape (41) débouchant dans le logement (203) une connexion de fluide sous pression et
d) un corps de fermeture (58), qui forme avec l'ouverture (44) une soupape de non retour (54), dans une position de fermeture de la soupape de non retour (54), le corps de fermeture (58) fermant l'ouverture (44) et dans une position d'ouverture, le corps de fermeture (58) libérant l'ouverture (44),
e) le corps de fermeture (58) présentant
ea) au moins un élément de guidage (61), qui pendant un mouvement de fermeture provoqué par une chute d'une différence de pression des deux côtés du corps de fermeture (58) pour le guidage du corps de fermeture (58), est en contact glissant avec le piston de commande (42) ou le boîtier de soupape (41), ainsi
eb) qu'un corps d'arrêt (59), l'élément de guidage (61) et le corps d'arrêt (59) étant déplacés ensemble pendant un déplacement du corps de fermeture (58) entre la position d'ouverture et la position de fermeture, et
f) un élément de ressort (206) étant prévu, lequel sollicite le corps de fermeture (58) dans la direction radiale et dans la direction de la position de fermeture.

2. Soupape de commande selon la revendication 1, **caractérisée en ce que** l'élément de ressort (206) est un ressort spiral.

3. Soupape de commande selon la revendication 1, **caractérisée en ce que** l'élément de ressort (206) fait partie intégrante du corps de fermeture (58).

4. Soupape de commande selon l'une quelconque des revendications précédentes, **caractérisée en ce que** le corps de fermeture (58) est réalisé approximativement en forme de U avec une branche de base (200) et deux branches latérales parallèles (201, 202),
a) la branche de base (200) formant le corps d'arrêt (59) et
b) au moins une branche latérale (201, 202) formant l'élément de guidage (61), qui s'applique par guidage contre une surface de guidage (69, 69a) du piston de commande (42).

5. Soupape de commande selon la revendication 4, **caractérisée en ce qu'**un élément d'étanchéité élastique est réalisé dans la région de la branche de base (200).

6. Soupape de commande selon la revendication 4 ou 5, **caractérisée en ce qu'**une nervure à ressort (205) fait saillie depuis l'intérieur de la branche de base (200) en formant un angle aigu (204), et permet de supporter élastiquement le corps de fermeture (58) par rapport au piston de commande (42).

7. Soupape de commande selon l'une quelconque des revendications 4 à 6, **caractérisée en ce qu'**au moins une branche latérale (201, 202) présente, dans la région d'extrémité opposée à la branche de base (200), un nez (63) qui forme un encliquetage ou une butée avec le piston de commande (42).

8. Soupape de commande selon l'une quelconque des revendications 4 à 7, **caractérisée en ce qu'**au moins une branche latérale (201, 202) possède une ouverture de passage d'écoulement (64).
